# EUROPÄISCHE PATENTSCHRIFT

(11) **EP 3 143 318 B1**
(45) Veröffentlichungstag und Bekanntmachung des Hinweises auf die Patenterteilung: **10.07.2019**
(21) Anmeldenummer: 15723835.3
(22) Anmeldetag: 08.05.2015
(51) Int. Cl.: F16K 31/06, F16H 61/02, F16H 57/04, F15B 21/04

(54) **ELEKTROMAGNET FÜR EIN HYDRAULIKSYSTEM**
ELECTROMAGNET FOR A HYDRAULIC SYSTEM
ÉLECTROAIMANT POUR SYSTÈME HYDRAULIQUE

(30) Priorität: 16.05.2014 DE 102014007130
(43) Veröffentlichungstag der Anmeldung: 22.03.2017
(73) Patentinhaber: Audi AG, 85045 Ingolstadt (DE); Volkswagen Aktiengesellschaft, 38440 Wolfsburg (DE)
(72) Erfinder: SCHULLER, Dietmar, 93336 Altmannstein (DE); MEYER, Roland, 72622 Nürtingen (DE); CORELL, Christian, 36287 Oberjossa (DE); RANG, Oliver, 34132 Kassel (DE)
(74) Vertreter: Lehle, Josef
(86) Internationale Anmeldenummer: PCT/EP2015/000948
(87) Internationale Veröffentlichungsnummer: WO 2015/172875

(56) Entgegenhaltungen:
- WO-A1-2012/057439
- WO-A1-2013/192003
- US-A- 4 563 664
- US-A- 5 259 414
- US-A1- 2002 162 594
- US-A1- 2005 257 762
- US-A1- 2007 295 413
- US-A1- 2008 315 140
- US-A1- 2009 026 399
- US-A1- 2014 041 742

## Beschreibung

Die Erfindung betrifft ein Elektromagnetventil für ein Hydrauliksystem nach dem Patentanspruch 1.

Ein Elektromagnet wird zum Beispiel für eine Haltevorrichtung oder ein Elektromagnetventil eingesetzt. Dieses kann beispielhaft als ein Druckregelventil, ein Vorsteuerventil, ein Volumensteuerventil oder ein Schaltventil im Hydrauliksystem eines Automatikgetriebes eines Kraftfahrzeuges arbeiten, um zum Beispiel Getriebekomponenten anzusteuern, etwa Kupplungen oder Aktuatoren zum Gangeinlegen.

Aus der DE 41 33 536 A1 ist ein Elektromagnetventil bekannt, das einen, mit einer Hydraulikleitung strömungstechnisch verbindbaren, mit Hydraulikmedium gefüllten Ankerraum aufweist, in dem ein Anker hubverstellbar gelagert ist. Das im Ankerraum befindliche Hydraulikmedium dient zur Kühlung, Schmierung und hydraulischen Dämpfung des Ankers. Der Anker wirkt mit einem außerhalb des Ankerraums vorgesehenen, elektrisch ansteuerbaren Spulenteil des Elektromagnetventils zusammen. Der Anker weist einen Absperrkörper auf, mit dem zumindest ein Strömungsdurchlass einer Hydraulikleitung ansteuerbar ist. Der Absperrkörper des Ankers drückt gegen eine Rückstellfeder, so dass bei einer Hubbewegung des Ankers der Elektromagnet gegen die Rückstellkraft der Rückstellfeder arbeitet.

Zudem teilt der Anker den Ankerraum in eine, dem Strömungsdurchlass zugewandte Kammer (nachfolgend als durchlassseitige Kammer bezeichnet) und in eine davon abgewandte Innenkammer auf. Bei einer Hubbewegung des verstellbar im Ankerraum des Elektromagnetventils gelagerten Ankers erfolgt zwischen der durchlassseitigen Kammer und der Innenkammer ein Ölaustausch, bei dem das Hydraulikmedium für einen Volumen- oder Druckausgleich von der durchlassseitigen Kammer in die Innenkammer überströmen kann. Der Ölaustausch (Verstellsaugen) tritt bei Hubbewegungen des Ankers auf, wenn das Verdrängungsvolumen in der Innenkammer und in der durchlassseitigen Kammer des Elektromagnetventils unterschiedlich ist.

In einem gängigen, im Fahrzeuggetriebe eingesetzten Elektromagnetventil erfolgt der Ölaustausch zwischen der Innenkammer und/oder der durchlassseitigen Kammer des Elektromagnetventils und der Umgebung üblicherweise mit dem Ölsumpf. Dabei besteht die folgende Problematik: So findet der Ölaustausch direkt zum Ölsumpf statt, der besonders durch den Abrieb vom Radsatz oder der Kupplungen metallische Partikel enthalten kann. Das Hydraulikmedium (nachfolgend als Hydrauliköl bezeichnet) ist daher mit magnetischen Partikeln verunreinigt, die vom Elektromagneten angezogen werden können. Die Partikel können bei einem Ölaustausch in den Ankerraum des Elektromagnetventils gelangen und dort unerwünschte Funktionsbeeinträchtigungen verursachen, zum Beispiel eine Störung des Magnetfeldes, ein Zusetzen des Bewegungskorridors des Ankers sowie eine Veränderung des tribologischen Systems zwischen dem Anker und der, den Ankerraum begrenzenden Innenwandung. Desweiteren verbleiben die Partikel üblicherweise in dem Ankerraum, da hier durch Restmagnetisierung oder aufgrund des Elektromagneten Magnetfelder vorherrschen, die ein Ausspülen verhindern. Zusätzlich wird Schmutz in der Innenkammer durch einen kleinen Ankerspalt zwischen dem Anker und der, den Ankerraum begrenzenden Innenumfangswand abgeschottet.

Zur Steigerung des Reinheitsgrades des Hydrauliköls werden in gängigen Hydrauliksystemen Filter eingesetzt. Durch die Filter wird die Anzahl von Partikeln im Hydrauliksystem reduziert.

Aus der DE 2011 055 093 A1 ist ein Elektromagnetventil bekannt, bei dem der durchlassseitigen Kammer des Ankerraums ein Aufnahmeraum strömungstechnisch vorgelagert ist. In dem Aufnahmeraum ist eine schwimmend gelagerte Scheibe vorgesehen, mit der der Schmutzeintrag in die Innenkammer des Ankerraums des Elektromagnetventils von Verunreinigungspartikel reduziert ist.

Die US 2007/0295413 A1 beschreibt ein Elektromagnetventil mit einem Steuerschieber. Der Steuerschieber ist mit einem Anker verbunden, der mit Hilfe eines Elektromagneten verstellbar in einem Ankerraum aufgenommen ist.

Die Aufgabe der Erfindung besteht darin, ein Elektromagnetventil für ein Hydrauliksystem bereitzustellen, bei dem der Eintrag von Verunreinigungspartikel in den Elektromagnet-Ankerraum in einfacher Weise reduzierbar ist.

Die Aufgabe ist durch die Merkmale des Patentanspruches 1 gelöst. Bevorzugte Weiterbildungen der Erfindung sind in den Unteransprüchen offenbart.

Gemäß dem Patentanspruch 1 weist das Elektromagnetventil ein Hydraulikölreservoir (nachfolgend als Ölreservoir bezeichnet) auf, in dem Hydraulikmedium gespeichert ist, das im Vergleich zum Hydraulikmedium in der Hydraulikleitung bzw. dem Hydrauliksystem mit weniger Verunreinigungspartikel belastet ist, das heißt einen höheren Reinheitsgrad aufweist. Das Ölreservoir ist mit der durchlassseitigen Kammer des Ankerraums strömungstechnisch verbunden. Das Ölreservoir ist speziell bei einem Ölaustausch wirksam, bei dem Hydrauliköl von der durchlassseitigen Kammer in die Innenkammer überströmt. In diesem Fall stellt das Ölreservoir zumindest teilweise das in die Innenkammer überströmende Verstellvolumen des Hydrauliköls bereit. Auf diese Weise wird der Schmutzeintrag von Verunreinigungspartikel in die Innenkammer reduziert, wodurch die Möglichkeit einer Funktionsbeeinträchtigung des Elektromagnetventils reduziert wird.

Der Absperrkörper des hubverstellbaren Ankers kann beispielhaft den Strömungsdurchlass zwischen einer zu einem Arbeitsanschluss eines Elektromagnetventils führenden Teilleitung und einer zu einem Tankanschluss des Elektromagnetventils führenden Teilleitung steuern. In diesem Fall kann das Ölreservoir in baulich einfacher Weise unmittelbar an der zum Tankanschluss führenden Teilleitung ausgebildet sein, und zwar durch eine baulich einfache Querschnittserweiterung des Strömungsquerschnitts der Teilleitung. Das Ölreservoir kann bevorzugt als eine taschenförmige Ausnehmung an der Innenwandung der jeweiligen Hydraulikleitung ausgeführt sein.

Wie oben erwähnt, ist der Tankanschluss des Elektromagnetventils über eine Ablaufleitung mit dem Ölsumpf strömungstechnisch in Verbindung. In diesem Fall besteht im Stand der Technik die Problematik, dass bei einem Ölaustausch von der durchlassseitigen Kammer in Richtung auf die Innenkammer verunreinigtes Hydrauliköl aus dem Ölsumpf angesaugt und über den ventilseitigen Tankanschluss sowie die durchlassseitige Kammer bis in die Innenkammer gelangt. Um eine solche Rückströmung von verunreinigtem Hydrauliköl zu vermeiden, kann das Elektromagnetventil einen Strömungsunterbrecher aufweisen. Mittels des Strömungsunterbrechers wird beim Ölaustausch von der durchlassseitigen Kammer in die Innenkammer eine Rückströmung aus dem Ölsumpf bis in die durchlassseitige Kammer verhindert, jedoch eine Ölströmung in umgekehrter Richtung zugelassen.

Zur Realisierung eines solchen Strömungsunterbrechers kann sich die zum sumpfseitigen Tankanschluss führende Teilleitung in einer Hochführung in der Gerätehochrichtung nach oben erstrecken. Der am Ende der Teilleitung vorgesehene Tankanschluss (Auslassöffnung der Teilleitung) kann um einen Höhenversatz geodätisch oberhalb des Ölsumpfes angeordnet sein. Der Tankanschluss kann alternativ oder zusätzlich unter Zwischenschaltung eines Belüftungsfreiraums in Strömungsverbindung mit dem Ölsumpf sein.

In einer technischen Realisierung des Elektromagnetventils kann der Absperrkörper des Ankers gegen eine Rückstellfeder bzw. gegen eine hydraulische Rückführfläche drücken, das heißt der Elektromagnet des Elektromagnetventiles arbeitet gegen eine Rückstellkraft. Die Rückstellfeder kann in einem Federraum angeordnet sein, in dem der Absperrkörper verstellbar geführt ist. Für eine leichtgängige Führung ist der Absperrkörper erfindungsgemäß unter Bildung eines, ein Lagerspiel bereitstellenden Ventilspaltes im Hydraulikraum oder insbesondere im Federraum gleitgelagert. Der Absperrkörper muss nicht zwingend in einem Federraum gleitgelagert sein, sondern kann anstelle dessen auch in einem beliebigen Hydraulikraum gleitgelagert sein.

Zudem kann der Federraum bzw. der Hydraulikraum mit Umgebungsdruck beaufschlagt sein, das heißt über eine Ablaufleitung mit dem Ölsumpf verbunden sein. In diesem Fall erfolgt durch den Ventilspalt eine Basisleckage von Hydrauliköl über den Hydraulikraum in den Ölsumpf. Der Absperrkörper des Ankers kann bei einer Ausbildung des Elektromagnetventils als Druckregelventil oder als Volumensteuerventil ein axial verschiebbarer Kolben sein, der beispielhaft zumindest einen ersten Ringbund und/oder einen zweiten Ringbund aufweist, die axial voneinander beabstandet sind. Je nach Axialstellung des Kolbens kann die Steuerkante des ersten Ringbundes einen Strömungsdurchlass zwischen einem ventilseitigen Druckanschluss, der zu einer Druckquelle führt, und dem ventilseitigen Arbeitsanschluss freigeben oder verschließen, der zu einem hydraulischen Verbraucher, das heißt zum Beispiel einer Getriebekomponente führt. In gleicher Weise kann die Steuerkante des zweiten Anker-Ringbundes einen Strömungsdurchlass zwischen dem ventilseitigen Tankanschluss und dem ventilseitigen Arbeitsanschluss freigeben oder verschließen. Die Druckquelle kann eine Hydraulikpumpe sein, deren Saugseite strömungstechnisch mit dem Ölsumpf in Verbindung steht.

Der oben erwähnte, erfindungsgemäße Ventilspalt zwischen dem Hydraulikraum und dem darin verschiebbar geführten Absperrkörper ist in der technischen Umsetzung äußerst gering. Der Ventilspalt wirkt daher als ein Rückhaltemittel, das Verunreinigungspartikel im abfließenden Hydrauliköl abfängt. Daher weist das in den Hydraulikraum einströmende Hydrauliköl einen größeren Reinheitsgrad auf als das Hydrauliköl in der Hydraulikleitung.

Erfindungsgemäß wird das im Hydraulikraum befindliche, spaltgefilterte Hydrauliköl nicht ungenutzt in den Ölsumpf rückgeleitet, sondern für den Ölaustausch bereitgehalten, bei dem ein Öl-Verstellvolumen in die Innenkammer überströmt. Hierzu ist das Ölreservoir unter Querschnittserweiterung des Hydraulikraums oder der Ablaufleitung gebildet. Der Hydraulikraum/die Ablaufleitung ist erfindungsgemäß über eine Verbindungsleitung unmittelbar mit der durchlassseitigen Kammer verbunden. Im Ölaustausch-Fall kann somit das spaltgefilterte Hydrauliköl von dem Hydraulikraum über die Verbindungsleitung und die durchlassseitige Kammer bis in die Innenkammer geführt werden.

In einer weiteren Ausführungsform kann die durchlassseitige Kammer des Ankerraums mittels einer Ventilgehäusewand von der Hydraulikleitung getrennt sein. Die Ventilgehäusewand kann eine Lageröffnung aufweisen, durch die der Absperrkörper des Ankers geführt ist, und zwar unter Bildung eines, ein Lagerspiel bereitstellenden Ventilspaltes. Im Hinblick auf einen Druckausgleich zwischen der Hydraulikleitung und der durchlassseitigen Kammer kann eine Ausgleichsleitung bereitgestellt sein, über die beim Ölaustausch zumindest teilweise das Verstellvolumen des Hydrauliköls führbar ist.

In einer weiteren Ausführungsform kann eine zur durchlassseitigen Kammer oder zur Innenkammer des Ankerraums führende Hydraulikleitung zumindest ein, bevorzugt als Permanentmagnet ausgebildetes Schmutzfangelement aufweisen, das Verunreinigungen im Hydraulikmedium zurückhält, das bei einem Ölaustausch die Hydraulikleitung durchströmt.

Alternativ und/oder zusätzlich kann in der, zur durchlassseitigen Kammer des Ankerraums führenden Verbindungsleitung zumindest ein Schmutzfangelement vorgesehen sein, mit dem Verunreinigungspartikel im Hydrauliköl zurückgehalten werden, das bei einem Ölaustausch die Verbindungsleitung durchströmt.

Beispielhaft kann das Schmutzfangelement ein aus einem Vollmaterial gefertigter, zum Beispiel stabartiger Permanentmagnet sein, der bevorzugt innerhalb der Verbindungsleitung positioniert ist. Alternativ dazu kann das Schmutzfangelement nicht aus einem Vollmaterial, sondern vielmehr aus einem strömungsdurchlässigen Geflecht angefertigt sein, das innerhalb der Ausgleichsleitung positioniert ist und insbesondere aus einem magnetischen Material gefertigt ist. Zusätzlich kann das Schmutzfangelement auch als eine, an der Innenwandung der Verbindungsleitung gebildete Schmutzfangkontur ausgeführt sein, die Erhebungen und Vertiefungen aufweist. Der Boden der Vertiefungen kann darüber hinaus magnetisch ausgeführt sein, um den Rückhalteeffekt der Schmutzfangkontur zu steigern.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend von Zeichnungen näher erläutert.

Es zeigen:
- Fig. 1a, 1b und 1c: in einer grob schematischen Darstellung ein nicht von der Erfindung umfasstes Elektromagnetventil in unterschiedlichen Betriebszuständen;
- Fig. 2, 3 und 5: jeweils Ansichten entsprechend der Fig. 1b, die jeweils nicht von der Erfindung umfasste Ausführungsbeispiele eines Elektromagnetventils zeigen;
- Fig. 4: eine Ansicht entsprechend der Fig. 1b eines erfindungsgemäßen Elektromagnetventils;
- Fig. 6: in einer Detailansicht eine zur durchlassseitigen Kammer des Ankerraums führende Verbindungsleitung mit einem Schmutzfangelement; und
- Fig. 7 bis 10: jeweils Ansichten entsprechend der Fig. 6 mit alternativen Schmutzfangelementen.

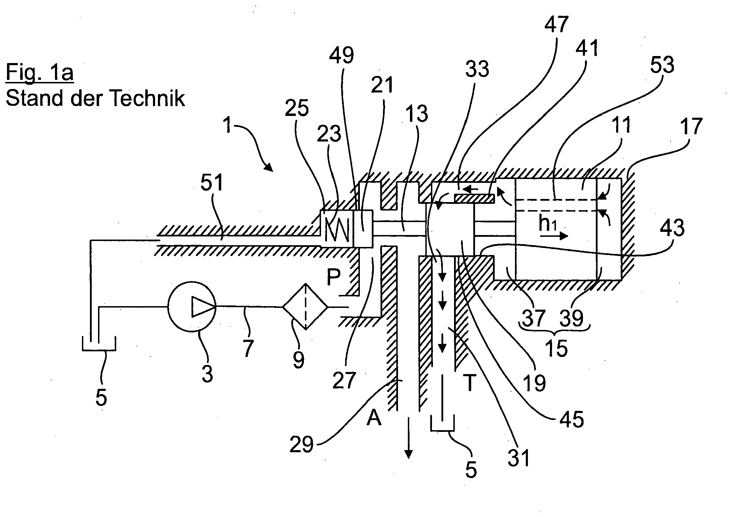

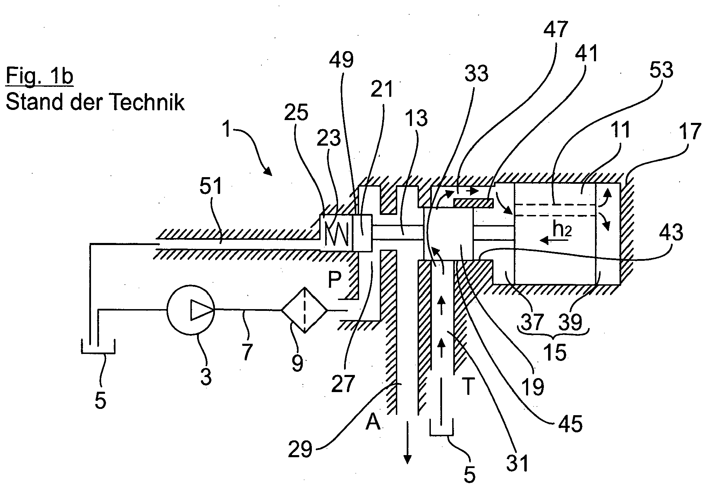

In der Fig. 1a und 1b sind zum einfacheren Verständnis der Erfindung zunächst ein nicht von der Erfindung umfasstes Vergleichsbeispiel gezeigt, in dem ein Elektromagnetventil 1 in einem teilweise dargestellten Hydrauliksystem eines Automatikgetriebes geschaltet ist. Das Hydrauliksystem weist eine Hydraulikpumpe 3 auf, die saugseitig mit einem Ölsumpf 5 verbunden ist und druckseitig über eine Druckleitung 7 an einem Druckanschluss P des Elektromagnetventils 1 angeschlossen ist. Das Elektromagnetventil 1 weist zudem einen Arbeitsanschluss A auf, der über eine nicht gezeigte Arbeitsleitung mit einer Hydraulikkomponente des Getriebes, zum Beispiel einer Kupplung oder eines Aktuators zum Gangeinlegen verbunden ist. Zudem weist das Elektromagnetventil 1 einen Tankanschluss T auf, der ebenfalls mit dem Ölsumpf 5 strömungstechnisch in Verbindung ist. Um Verunreinigungspartikel aus dem Hydrauliköl zu entfernen, ist in der Druckleitung 7 ein Filter 9 geschaltet.

In der Fig. 1a und 1b ist das Elektromagnetventil beispielhaft ein direkt gesteuertes Druckregelventil mit einem axialhubverstellbaren Anker 11, der mit einem Kolben 13 verlängert ist. Der Anker 11 ist in einem Ankerraum 15 hubverstellbar geführt, der mit Hydrauliköl gefüllt ist und strömungstechnisch mit dem Hydraulikweg innerhalb des Elektromagnetventils 1 verbunden ist. Der Ankerraum 15 ist durch ein schraffiert angedeutetes Ventilgehäuse 17 begrenzt, wobei außerhalb des Ankerraums 15 eine nicht gezeigte Elektromagnet-Spule angeordnet ist, die von einem Getriebesteuergerät ansteuerbar ist, um den Anker 11 mittels Elektromagnetkraft zu verstellen.

Der Kolben 13 des Ankers 11 weist in der Fig. 1a und 1b einen ersten Ringbund 19 und einen zweiten durchmesserkleineren Ringbund 21 auf, die axial voneinander beabstandet am Kolben 13 ausgebildet sind. Die vom Anker 11 abgewandte Stirnseite des Kolbens 13 ist gegen eine Rückstellfeder 23 abgestützt, die in einem Federraum 25 positioniert ist.

Je nach Axialstellung des Kolbens 13 wird eine Steuerkante des ersten Ringbunds 19 mehr oder weniger in Überdeckung mit einem Strömungsdurchlass 33 zwischen einer zum Arbeitsanschluss A führenden Teilleitung 29 und einer zum Tankanschluss T führenden Teilleitung 31 gebracht. Entsprechend wird die Steuerkante des zweiten Ringbundes 21 je nach Kolben-Axialstellung mehr oder weniger in Überdeckung mit dem Strömungsdurchlass zwischen der zum Druckanschluss P führenden Teilleitung 27 und der zum Arbeitsanschluss A führenden Teilleitung 29 gebracht.

Wie aus der Fig. 1a und 1b weiter hervorgeht, ist der Ankerraum 15 mittels des hubverstellbaren Ankers 11 in eine den Strömungsdurchlässen 27, 33 zugewandte Kammer 37 und in eine davon abgewandte Innenkammer 39 aufgeteilt. Die strömungsseitige Kammer 37 ist über eine ventilgehäuseseitige Trennwand 41 von der zum Tankanschluss T führenden Teilleitung 31 abgetrennt. Die Trennwand 41 weist eine Lageröffnung 43 auf, in der der Ringbund 19 des Kolbens 13 unter Bildung eines, ein Lagerspiel bereitstellenden Ventilspalts 45 gelagert ist. Zudem weist die Trennwand 41 eine Verbindungsleitung 47 auf, mit der die durchlassseitige Kammer 37 und die zum Tankanschluss T führende Teilleitung 31 miteinander verbunden sind.

Der durchmesserkleinere, zweite Ringbund 21 ist unter Bildung eines weiteren, ein Lagerspiel bereitstellenden Ventilspalts 49 in dem Federraum 25 verstellbar gelagert. Vom Federraum 25 führt zudem eine Ablaufleitung 51 zum Ölsumpf 5, wodurch der Federraum 25 mit Umgebungsdruck beaufschlagt ist.

Bei einer Hubverstellung h₁, h₂ des Ankers 11 aufgrund einer entsprechenden Ansteuerung des Spulenteils des Elektromagnetventils erfolgt zwischen der strömungsseitigen Kammer 37 und der Innenkammer 39 ein Ölaustausch. Beispielhaft wird in der Fig. 1a der Anker 11 durch eine Hubverstellung h₁ in den Ankerraum 15 eingefahren. Dadurch wird ein Verstellvolumen des Hydrauliköls von der Innenkammer 39 über eine gestrichelt gezeigte Ausgleichsleitung 53 im Anker 11 zur strömungsseitigen Kammer 37 geleitet. Diese ist jedoch volumenkleiner als die Innenkammer 39, so dass das Verstellvolumen zumindest teilweise über die Verbindungsleitung 47 und über die Teilleitung 31 zum Ölsumpf 5 geführt wird, wie es in der Fig. 1a mit Pfeilen angedeutet ist.

In der Fig. 1b wird dagegen der Anker 11 mittels Hubverstellung h₂ aus dem Ankerraum 15 ausgefahren. Bei einem solchen Ölaustausch besteht in der Fig. 1b die Problematik, dass verunreinigtes Hydrauliköl vom Ölsumpf 5 über den Tankanschluss T, die Teilleitung 31 sowie die Verbindungsleitung 47 in die strömungsseitige Kammer 37 gesaugt und von dort weiter über die Ausgleichsleitung 53 bis in die Innenkammer 39 gesaugt wird, wodurch sich Verunreinigungspartikel in der Innenkammer 39 sammeln können.

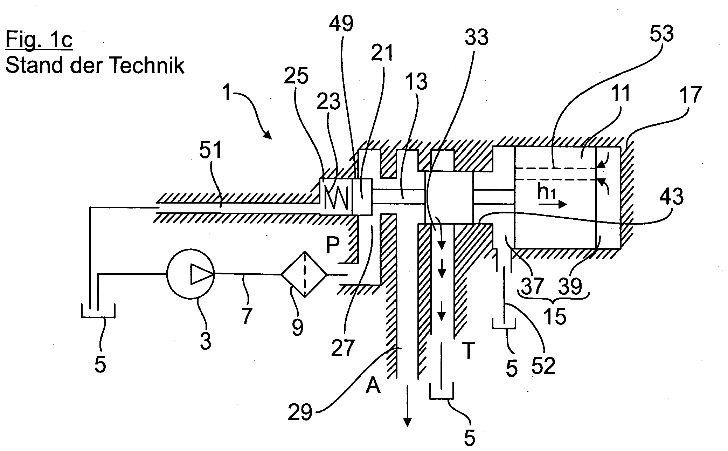

Die oben dargelegte Problematik gilt auch für das in der Fig. 1c gezeigte Ventil, das grundsätzlich baugleich wie das in den Fig. 1a und 1b gezeigte Ventil ausgeführt ist. Im Unterschied zur Fig. 1a und 1b ist in der Fig. 1c die durchlassseitige Kammer 37 über eine Ablaufleitung 52 unmittelbar mit dem Ölsumpf 5 verbunden, so dass bei der Hubverstellung h₂ das verunreinigte Hydrauliköl unmittelbar vom Ölsumpf 5 über die Ablaufleitung 52 in die durchlassseitige Kammer 37 gelangt.

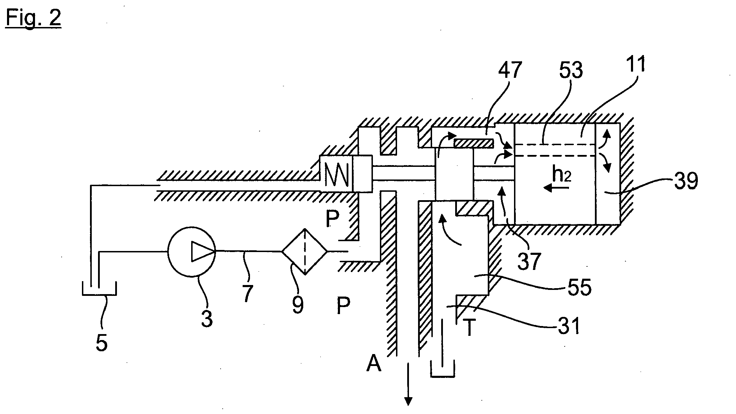

Um ein solches Verstellsaugen von verunreinigtem Hydrauliköl bis in die Innenkammer 39 zu vermeiden, weist das nicht von der Erfindung umfasste Elektromagnetventil 1 in der Fig. 2 ein Ölreservoir 55 auf, in dem Hydrauliköl gespeichert ist, das im Vergleich zum Hydrauliköl in den Hydraulikleitungen 29, 31, 35 einen höheren Reinheitsgrad aufweist, das heißt weniger mit Verunreinigungspartikel durchsetzt ist. In der Fig. 2 ist das Ölreservoir 55 nach Art einer taschenförmigen Ausnehmung in der Innenwandung der zum Tankanschluss T führenden Teilleitung 31 ausgebildet. Das Ölreservoir 55 bildet hier eine Totzone, in der sich das Hydrauliköl nur mit eingeschränkter Strömungsgeschwindigkeit bewegt, wodurch Verunreinigungspartikel sedimentieren können. Dadurch erhöht sich der Reinheitsgrad des darin befindlichen Hydrauliköls. Der Reinheitsgrad des im Ölreservoir 55 gespeicherten Hydrauliköls wird durch den folgenden Umstand weiter erhöht: So erfolgt das Befüllen des Ölreservoirs 55 während des Hydraulikbetriebs nicht durch verunreinigtes Hydrauliköl aus dem Ölsumpf 5, sondern vielmehr während des Hydraulikbetriebes, wenn das bereits mittels des Filters 9 vorgefilterte Hydrauliköl 5 zum Druckabbau über die zum Tankanschluß T führende Leitung 31 in den Ölsumpf 5 geleitet wird.

Bei einem, in der Fig. 2 durch die Pfeile angedeuteten Ölaustausch (aufgrund der Hubverstellung h₂) wird somit zum großen Teil das durch Sedimentation und Filterung (durch Filter 9) gereinigte Hydrauliköl - und nicht das hochverunreinigte Hydrauliköl aus dem Ölsumpf 5 - als Verstellvolumen bereitgestellt, das beim Ölaustausch in die Innenkammer 39 verdrängt wird.

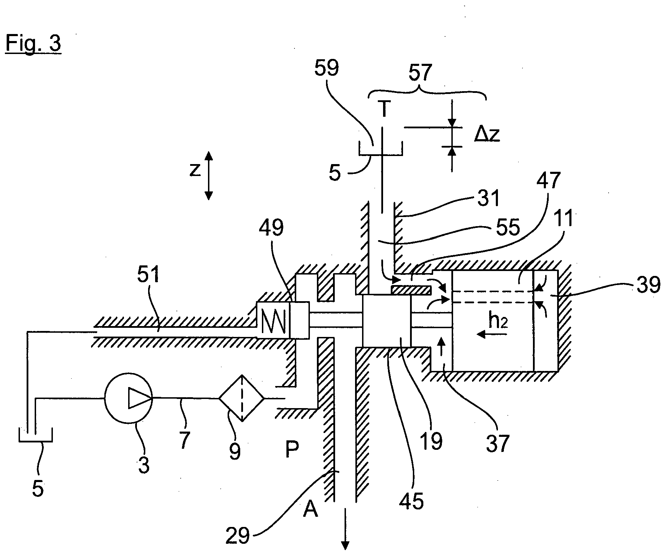

In der Fig. 3 weist das nicht von der Erfindung umfasste Elektromagnetventil 1 darüber hinaus einen Strömungsunterbrecher 57 auf, der beim Ölaustausch von der durchlassseitigen Kammer 37 in die Innenkammer 39 (siehe Pfeile in der Fig. 3) eine Strömungsverbindung zum Ölsumpf 5 unterbricht, wodurch eine Rückströmung von verunreinigtem Hydrauliköl in die durchlassseitige Kammer 37 und weiter in die Innenkammer 39 verhindert ist. Zur Bildung des Strömungsunterbrechers 57 ist in der Fig. 3 die zum sumpfseitigen Tankanschluss T führende Teilleitung 31 in einer Hochführung in der Gerätehochrichtung z nach oben geführt. Der Tankanschluss T ist in der Fig. 3 durch eine nach oben offene, freie Auslassöffnung realisiert, die um einen Höhenversatz Δz geodätisch oberhalb des Ölsumpfes 5 angeordnet ist. Zwischen dem Tankanschluss T (das heißt der freien Auslassöffnung) und dem Ölsumpf 5 ist zudem ein Belüftungsfreiraum 59 geschaltet, der die oben erwähnte Rückströmung verhindert. Die zum Tankanschluss T führende Teilleitung 31 bildet in der Fig. 3 das Ölreservoir 55.

In der Fig. 3 ist eine Ventilstellung gezeigt, bei der der Ringbund 19 des Absperrkörpers 13 das kaminartig ausgeführte Ölreservoir 55 schließt. In diesem Betriebszustand erfolgt eine Spaltfiltration, bei der das Hydrauliköl durch den Ventilspalt 45 am Ringbund 19 des Absperrkörpers 13 in die durchlassseitige Kammer 37 gespeist wird und so das kaminartige Ölreservoir 55 befüllt.

Zudem erfolgt ein Befüllen des Ölreservoirs 55, wenn der Ringbund 19 des Absperrkörpers 13 einen Strömungsspalt zum Ölreservoir 55 öffnet. In diesem Fall wird das bereits vom Filter 9 gefilterte Öl in das Ölreservoir 55 gespeist.

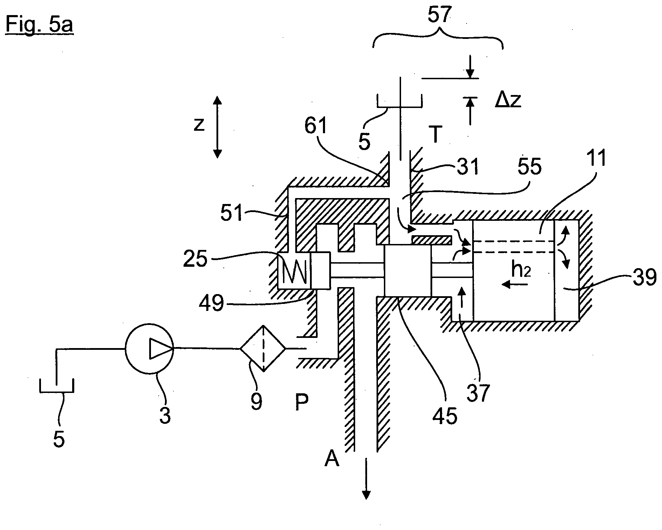

In der Fig. 5a ist eine weitere nicht von der Erfindung umfasste Ausführungsvariante gezeigt, deren grundsätzlicher Aufbau identisch mit der Fig. 3 ist. In der Fig. 5a wird das im Rahmen der Basisleckage durch den Ventilspalt 45 in den Federraum 25 einströmende, d.h. bereits spaltgefilterte Hydrauliköl für den oben erwähnten Ölaustausch bereitgestellt. Hierzu ist die Ablaufleitung 51 nicht mehr unmittelbar zum Ölsumpf 5 geführt, sondern vielmehr unter Zwischenschaltung der zum Tankanschluss T führenden Teilleitung 31. Die Ablaufleitung 51 mündet nämlich in einer Verzweigungsstelle 61 in die als Ölreservoir 55 dienende, bevorzugt kaminartige Teilleitung 31.

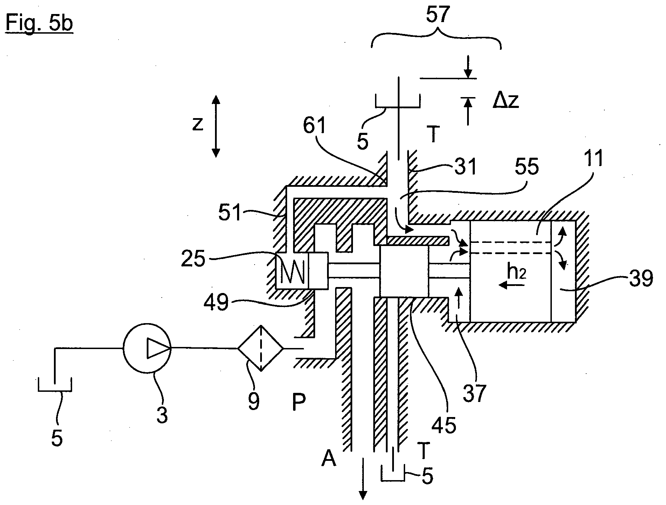

Das in der Fig. 5b gezeigte nicht von der Erfindung umfasste Ventil ist im Wesentlichen baugleich wie das in der Fig. 5a gezeigte Ventil. Im Unterschied zur Fig. 5a ist in der Fig. 5b ein zweiter Tankanschluß T vorgesehen. In der Fig. 5b wird das Ölreservoir 55 durch eine Spaltleckage gefüllt, bei der spaltgefiltertes Lecköl aus dem Federraum 25 in das Ölreservoir 55 gespeist wird. In der Fig. 5b wird somit das Ölreservoir 55 ausschließlich mit spaltgefiltertem Öl gefüllt, wodurch der Reinheitsgrad des im Ölreservoir 55 gespeicherten Öls weiter gesteigert ist.

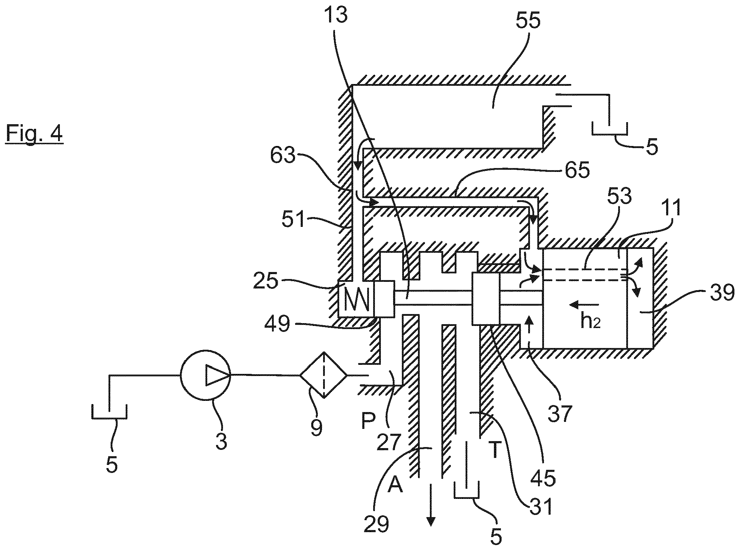

Gemäß der erfindungsgemäßen Ausbildung des Elektromagnetventils, die in der Fig. 4 gezeigt ist, wird ebenfalls das in den Federraum 25 einströmende, spaltgefilterte Hydrauliköl als Verstellvolumen für den Ölaustausch verwendet. Demzufolge ist die vom Federraum 25 abzweigende Ablaufleitung 51 unter Zwischenordnung des Ölreservoirs 55 mit dem Ölsumpf 5 in Verbindung. Zudem ist an einer Verzweigungsstelle 63 zwischen Federraum 25 und dem Ölreservoir 55 eine Verbindungsleitung 65 abgezweigt, die unmittelbar zur strömungsseitigen Kammer 37 führt. Das beim Ölaustausch erforderliche Verstellvolumen wird somit vollständig durch das spaltgefilterte Hydrauliköl bereitgestellt. Bei der in der Fig. 4 gezeigten Leitungsführung kann auf die Verbindungsleitung 47 verzichtet werden, die die Teilleitung 31 mit der strömungsseitigen Kammer 37 verbindet, wie es in den vorangegangenen Fig. 1 bis 3 und 5 der Fall ist.

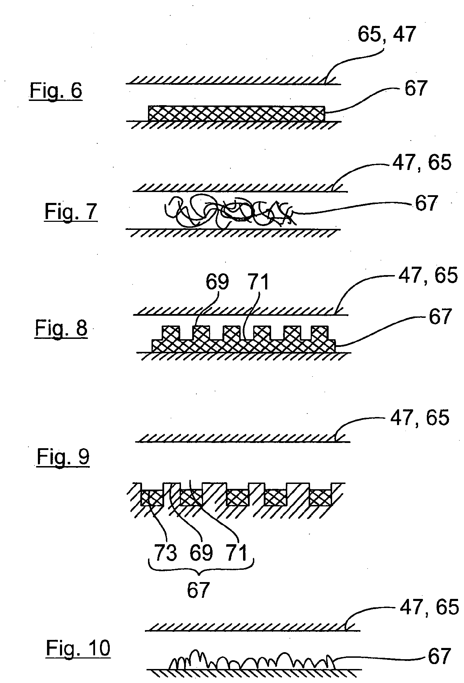

In den folgenden Fig. 6 bis 10 sind unterschiedliche Ausführungsbeispiele der Verbindungsleitungen 47, 65 dargestellt. Gemäß der Fig. 6 ist innerhalb der Verbindungsleitung 47, 65 ein stabartiger Permanentmagnet 67 angeordnet. Der Permanentmagnet wirkt als ein Schmutzfangelement, mit dem ferromagnetische Verunreinigungspartikel aus dem vorbeiströmenden Hydrauliköl entfernt werden können. Alternativ dazu ist in der Fig. 7 das Schmutzfangelement kein stabartiger Permanentmagnet, sondern vielmehr ein strömungsdurchlässiges Geflecht, das von Hydrauliköl durchströmbar ist. Das Geflecht kann bevorzugt aus einem magnetischen Material gebildet sein.

In der Fig. 8 ist das Schmutzfangelement eine Schmutzfangkontur mit Erhebungen 69 und Vertiefungen 71. Die Schmutzfangkontur 67 ist in der Fig. 8 aus einem magnetischen Material ausgeführt. In der Fig. 9 ist das Schmutzfangelement ebenfalls als Schmutzfangkontur mit Erhebungen 69 und Vertiefungen 71 ausgeführt. Im Unterschied zur Fig. 8 sind in der Fig. 9 jedoch lediglich die Böden 73 der Vertiefungen 71 magnetisch ausgeführt.

In der Fig. 10 ist ein Ausführungsbeispiel gezeigt bei der das Schmutzfangelement ein Gewebe ist, die nach Art einer Fußmatte bodenseitig in der Verbindungsleitung eingelegt ist. Im Hydraulikbetrieb sedimentierten Schmutzpartikel aus dem Öl in das Gewebe und verfangen sich dort.

## Patentansprüche

1. Elektromagnetventil für ein Hydrauliksystem, insbesondere für ein Automatikgetriebe eines Kraftfahrzeugs, mit
einem, mit Hydraulikleitungen des Hydrauliksystems strömungstechnisch verbindbaren, mit Hydraulikmedium gefüllten Ankerraum (15), in dem ein Anker (11) hubverstellbar (h₁, h₂) gelagert ist, der einen Absperrkörper (13) aufweist, welcher Anker (11) den Ankerraum (15) in eine dem Strömungsdurchlass (27, 33) zugewandte, durchlassseitige Kammer (37) und in eine davon abgewandte Innenkammer (39) aufteilt,
wobei bei einer Hubbewegung (h₁, h₂) des Ankers (11) ein Ölaustausch erfolgt, bei dem ein Verstellvolumen des Hydraulikmediums von der durchlassseitigen Kammer (37) in die Innenkammer (39) überströmt,
wobei zur Bereitstellung des Hydraulikmedium-Verstellvolumens das Elektromagnetventil (1) ein Hydraulikmedium-Reservoir (55) aufweist, dessen Hydraulikmedium im Vergleich zum Hydraulikmedium in einer Hydraulikleitung (27, 29, 31) einen höheren Reinheitsgrad aufweist und das mit der durchlassseitigen Kammer (37) strömungstechnisch verbunden ist,
wobei das Hydraulikmedium-Reservoir (55) zumindest teilweise mit spaltgefiltertem Hydraulikmedium gefüllt ist,
wobei der Absperrkörper (13) des Ankers (11) unter Bildung eines, ein Lagerspiel bereitstellenden Ventilspalts (49) zwischen einem Hydraulikraum (25) und dem Absperrkörper (13) in dem Hydraulikraum (25) verstellbar geführt ist, **dadurch gekennzeichnet, dass** der Hydraulikraum (25) an der vom Anker (11) abgewandten Stirnseite des Absperrkörpers (13) über eine Ablaufleitung (51) mit dem Hydraulikmedium-Reservoir (55) verbunden ist, so dass durch den Ventilspalt (49) eine Leckage von spaltgefiltertem Hydraulikmedium in den Hydraulikraum (25) erfolgt und das spaltgefilterte Hydraulikmedium in das Hydraulikmedium-Reservoir (55) füllbar ist,
wobei die Ablaufleitung (51) über eine Verbindungsleitung (65) mit der durchlassseitigen Kammer (37) oder der Innenkammer (39) verbunden ist, und
wobei über die Verbindungsleitung (65) das Verstellvolumen des Hydraulikmediums zumindest teilweise beim Ölaustausch geführt ist.

2. Elektromagnetventil nach Anspruch 1, **dadurch gekennzeichnet, dass** mittels des Absperrkörpers (13) der Strömungsdurchlass (33) zwischen einer zu einem Arbeitsanschluss (A) des Elektromagnetventils (1) führenden Teilleitung (29) und einer zu einem sumpfseitigen Tankanschluss (T) führenden Teilleitung (31) gesteuert ist.

3. Elektromagnet nach Anspruch 1 oder 2, **dadurch gekennzeichnet, dass** das Elektromagnetventil (1) einen Strömungsunterbrecher (57) aufweist, der beim Ölaustausch von der durchlassseitigen Kammer (37) in die Innenkammer (39) eine Rückströmung von verunreinigtem Hydraulikmedium aus einem Hydraulikmedium-Sumpf (5) in die durchlassseitige Kammer (37) verhindert.

4. Elektromagnetventil nach einem der vorhergehenden Ansprüche, **dadurch gekennzeichnet, dass** das Hydraulikmedium-Reservoir (55) unter Querschnittserweiterung der Ablaufleitung (51) gebildet ist.

5. Elektromagnetventil nach einem der vorhergehenden Ansprüche, **dadurch gekennzeichnet, dass** ein Schmutzfangelement (67) insbesondere der Verbindungsleitung (65) zugeordnet ist.

6. Elektromagnetventil nach einem der vorhergehenden Ansprüche, **dadurch gekennzeichnet, dass** die durchlassseitige Kammer (37) des Ankerraums (15) über eine Ventilgehäusewand (41) von der Hydraulikleitung (31) getrennt ist, und dass die Ventilgehäusewand (41) eine Lageröffnung (43) aufweist, durch die der Absperrkörper (13) unter Bildung eines, ein Lagerspiel bereitstellenden Ventilspalts (45) geführt ist.

7. Elektromagnetventil nach einem der vorhergehenden Ansprüche, **dadurch gekennzeichnet, dass** die durchlassseitige Kammer (37) mittels einer Verbindungsleitung (47) mit der Hydraulikleitung (31) verbunden ist, und dass über die Verbindungsleitung (47) zumindest teilweise das Verstellvolumen des Hydraulikmediums beim Ölaustausch geführt ist, und dass insbesondere das Schmutzfangelement (67) der Verbindungsleitung (47) zugeordnet ist.

8. Elektromagnetventil nach einem der vorhergehenden Ansprüche, **dadurch gekennzeichnet, dass** der Absperrkörper (13) des Ankers (11) ein axial verschiebbarer Kolben mit einem zumindest ersten Ringbund (19) und/oder zweiten Ringbund (21) ist, und dass die Steuerkante des zweiten Ringbunds (21) je nach Axialstellung des Kolbens (13) einen Strömungsdurchlass (27) zwischen einem Druckanschluss (P) einer Druckquelle (3) und dem Arbeitsanschluss (A) freigibt oder verschließt, und die Steuerkante des ersten Ringbunds (19) einen Strömungsdurchlass (27) zwischen dem Tankanschluss (T) und dem Arbeitsanschluss (A) freigibt oder verschließt.

9. Elektromagnetventil nach einem der Ansprüche 7 oder 8, **dadurch gekennzeichnet, dass** eine zur durchlassseitigen Kammer (37) oder zur Innenkammer (39) des Ankerraums (15) führende Hydraulikleitung (47, 53, 63, 65, 51) zumindest ein, insbesondere als Permanentmagnet ausgebildetes Schmutzfangelement (67) aufweist, das Verunreinigungen im Hydraulikmedium zurückhält, das bei einem Ölaustausch die Hydraulikleitung (47, 53, 63, 65, 51) durchströmt.

10. Elektromagnetventil nach Anspruch 9, **dadurch gekennzeichnet, dass** das Schmutzfangelement (67) ein bevorzugt stabartiger Permanentmagnet ist.

11. Elektromagnetventil nach Anspruch 9 oder 10, **dadurch gekennzeichnet, dass** das Schmutzfangelement (67) ein strömungsdurchlässiges Geflecht aus insbesondere magnetischem Material ist.

12. Elektromagnetventil nach einem der Ansprüche 9, 10 oder 11, **dadurch gekennzeichnet, dass** das Schmutzfangelement (67) eine an der Innenwandung der Hydraulikleitung (47, 53, 65) gebildete Schmutzfangkontur mit Erhebungen (69) und Vertiefungen (71) ist, wobei insbesondere alleine der Boden (73) der Vertiefungen (71) magnetisch ausgeführt ist.

## Claims

1. Solenoid valve for a hydraulic system, in particular for an automatic transmission of a motor vehicle, with
an armature chamber (15) fluidly connectable with hydraulic lines of the hydraulic system and filled with hydraulic medium, in which an armature (11) is mounted to be adjustable in stroke (h1, h2), which has a shut-off body (13), such that the armature (11) divides the armature space (15) into a passage-side chamber (37) facing the flow passage (27, 33) and into an inner chamber (39) facing away from it,
wherein during a stroke movement (h1, h2) of the armature (11) an oil exchange takes place in which a displacement volume of the hydraulic medium from the passage-side chamber (37) flows into the inner chamber (39), wherein the solenoid valve (1) has a hydraulic medium reservoir (55) for supplying the hydraulic medium adjustment volume, which has a hydraulic medium with a higher degree of purity in comparison to the hydraulic medium in the hydraulic line (27, 29, 31) and which is fluidly connected to the passage-side chamber (37),
wherein the hydraulic medium reservoir (55) is at least partially filled with disc filtered hydraulic medium,
wherein the shut-off body (13) of the armature (11) is adjustably guided in the hydraulic space (25) to form a valve aperture (49) providing a bearing clearance (49) between a hydraulic space (25) and the shut-off body (13),
**characterised in that**
the hydraulic chamber (25) on the end face of the shut-off body (13) facing away from the armature (11) is connected via a drainage line (51) to the hydraulic medium reservoir (55), so that leakage of the disc filtered hydraulic medium into the hydraulic space (25) takes place through the valve aperture (49) and the disc filtered hydraulic medium can be filled into the hydraulic medium reservoir (55),
wherein the drainage line (51) is connected via a connecting line (65) to the passage-side chamber (37) or the inner chamber (39), and
wherein the adjustment volume of the hydraulic medium is at least partially performed during the oil exchange via the connecting line (65).

2. Solenoid valve according to claim 1, **characterised in that** the flow passage (33) between a sub-line (29) leading to a working port (A) of the solenoid valve (1) and a sub-line (31) leading to a sump-side tank connection (T) is controlled by means of the shut-off body (13).

3. Solenoid according to claim 1 or 2, **characterised in that** the solenoid valve (1) has a flow interrupter (57) which, during the oil exchange from the passage-side chamber (37) into the inner chamber (39), prevents a backflow of contaminated hydraulic medium from a hydraulic medium sump (5) into the passage-side chamber (37).

4. Solenoid valve according to any one of the preceding claims, **characterised in that** the hydraulic medium reservoir (55) is formed with a cross-sectional widening of the drainage line (51).

5. Solenoid valve according to any one of the preceding Claims, **characterised in that** a dirt trap element (67) is in particular attached to the connecting line (65).

6. Solenoid valve according to any one of the preceding claims, **characterised in that** the passage-side chamber (37) of the armature chamber (15) is separated from the hydraulic line (31) via a valve housing wall (41), and that the valve housing wall (41) has a bearing opening (43) through which the shut-off body (13) is guided to form a valve aperture (45) which provides a bearing clearance.

7. Solenoid valve according to any one of the preceding claims, **characterised in that** the passage-side chamber (37) is connected to the hydraulic line (31) by means of a connecting line (47), and that the adjustment volume of the hydraulic medium is guided at least partially via the connecting line (47) during oil exchange, and **in that** in particular the dirt trap element (67) is attached to the connecting line (47).

8. Solenoid valve according to any one of the preceding claims, **characterised in that** the shut-off body (13) of the armature (11) is an axially displaceable piston with at least a first annular collar (19) and/or second annular collar (21), and that the control edge of the second annular collar (21) releases or closes a flow passage (27) between a pressure connection (P) of a pressure source (3) and the working port (A) depending on the axial position of the piston (13), and the control edge of the first annular collar (19) releases or closes a flow passage (27) between the tank connection (T) and the working connection (A).

9. Solenoid valve according to any one of claims 7 or 8, **characterised in that** a hydraulic line (47, 53, 63, 65, 51) leading to the passage-side chamber (37) or to the inner chamber (39) of the armature chamber (15) has at least one dirt trap element (67), in particular designed as a permanent magnet, which retains impurities in the hydraulic medium which flows through the hydraulic line (47, 53, 63, 65, 51) during an oil exchange.

10. Solenoid valve according to claim 9, **characterised in that** the dirt trap element (67) is a preferably rod-like permanent magnet.

11. Solenoid valve according to claim 9 or 10, **characterised in that** the dirt trap element (67) is a flow-permeable mesh made in particular of magnetic material.

12. Solenoid valve according to any one of claims 9, 10 or 11, **characterised in that** the dirt trap element (67) is a dirt trap contour formed on the inner walling of the hydraulic line (47, 53, 65) with elevations (69) and depressions (71), wherein the base (73) of the depressions (71) alone is in particular designed to be magnetic.

## Revendications

1. Vanne électromagnétique pour un système hydraulique, en particulier pour une transmission automatique d'un véhicule automobile, avec
un espace d'induit (15) rempli de fluide hydraulique, reliable en écoulement aux conduites hydrauliques du système hydraulique, dans lequel un induit (11) est logé de manière réglable en hauteur (h₁, h₂) qui présente un corps de blocage (13), lequel induit (11) sépare l'espace d'induit (15) en une chambre (37) côté passage tournée vers le passage d'écoulement (27, 33) et en une chambre intérieure (39) éloignée de celle-ci,
dans laquelle en cas de mouvement de course (h₁, h₂) de l'induit (11) un échange d'huile est effectué, pour lequel un volume de réglage du fluide hydraulique déborde de la chambre (37) côté passage dans la chambre intérieure (39),
dans laquelle pour la mise à disposition du volume de réglage de fluide hydraulique la vanne électromagnétique (1) présente un réservoir de fluide hydraulique (55), dont le fluide hydraulique présente par rapport au fluide hydraulique dans une conduite hydraulique (27, 29, 31) un degré de pureté supérieur et qui est raccordé en écoulement à la chambre côté passage (37),
dans laquelle le réservoir de fluide hydraulique (55) est rempli au moins partiellement de fluide hydraulique filtré par fente,
dans laquelle le corps de blocage (13) de l'induit (11) est guidé de manière réglable en formant une fente de vanne (49) mettant à disposition un jeu de palier entre un espace hydraulique (25) et le corps de blocage (13) dans l'espace hydraulique (25),
**caractérisée en ce que**
l'espace hydraulique (25) est raccordé au réservoir de fluide hydraulique (55) sur le côté avant éloigné de l'induit (11) du corps de blocage (13) par le biais d'une conduite d'évacuation (51) de sorte que par la fente de vanne (49) une fuite de fluide hydraulique filtré par fente soit effectuée dans l'espace hydraulique (25) et le fluide hydraulique filtré par fente puisse être rempli dans le réservoir de fluide hydraulique (55),
dans laquelle la conduite d'évacuation (51) est raccordée par le biais d'une conduite de liaison (65) à la chambre (37) côté passage ou la chambre intérieure (39), et
dans laquelle le volume de réglage du fluide hydraulique est guidé au moins partiellement lors de l'échange d'huile par la conduite de liaison (65).

2. Vanne électromagnétique selon la revendication 1, **caractérisée en ce que** le passage d'écoulement (33) est commandé au moyen du corps de blocage (13) entre une conduite partielle (29) menant à un raccord de travail (A) de la vanne électromagnétique (1) et une conduite partielle (31) menant à un raccord de réservoir (T) côté bac.

3. Vanne électromagnétique selon la revendication 1 ou 2, **caractérisée en ce que** la vanne électromagnétique (1) présente un interrupteur d'écoulement (57) qui empêche lors de l'échange d'huile de la chambre (37) côté passage dans la chambre intérieure (39) un reflux de fluide hydraulique non nettoyé d'un bac de fluide hydraulique (5) dans la chambre (37) côté passage.

4. Vanne électromagnétique selon la revendication 1, **caractérisée en ce que** le réservoir de fluide hydraulique (55) est formé par élargissement de section transversale de la conduite d'évacuation (51).

5. Vanne électromagnétique selon l'une quelconque des revendications précédentes, **caractérisée en ce qu'**un élément de collecte d'impuretés (67) est associé en particulier à la conduite de liaison (65).

6. Vanne électromagnétique selon l'une quelconque des revendications précédentes, **caractérisée en ce que** la chambre (37) côté passage de l'espace d'induit (15) est séparée par le biais d'une paroi de boîtier de vanne (41) de la conduite hydraulique (31), et que la paroi de boîtier de vanne (41) présente une ouverture de palier (43) par laquelle le corps de blocage (13) est guidé en formant une fente de vanne (45) mettant à disposition un jeu de palier.

7. Vanne électromagnétique selon l'une quelconque des revendications précédentes, **caractérisée en ce que** la chambre (37) côté passage est reliée au moyen d'une conduite de liaison (47) à la conduite hydraulique (31), et qu'au moins partiellement le volume de réglage du fluide hydraulique est guidé par le biais de la conduite de liaison (47) lors de l'échange d'huile, et qu'en particulier l'élément de collecte d'impuretés (67) est associé à la conduite de liaison (47).

8. Vanne électromagnétique selon l'une quelconque des revendications précédentes, **caractérisée en ce que** le corps de blocage (13) de l'induit (11) est un piston mobile axialement avec un au moins premier collet annulaire (19) et/ou second collet annulaire (21), et que l'arête de commande du second collet annulaire (21) libère ou ferme selon la position axiale du piston (13) un passage d'écoulement (27) entre un raccord de pression (P) d'une source de pression (3) et le raccord de travail (A), et l'arête de commande du premier collet annulaire (19) libère ou ferme un passage d'écoulement (27) entre le raccord de réservoir (T) et le raccord de travail (A).

9. Vanne électromagnétique selon l'une quelconque des revendications 7 ou 8, **caractérisée en ce qu'**une conduite hydraulique (47, 53, 63, 65, 51) menant à la chambre (37) côté passage ou à la chambre intérieure (39) de l'espace d'induit (15) présente au moins un élément de collecte d'impuretés (67) réalisé en particulier comme aimant permanent qui retient des impuretés dans le fluide hydraulique qui traverse la conduite hydraulique (47, 53, 63, 65, 51) lors de l'échange d'huile.

10. Vanne électromagnétique selon la revendication 9, **caractérisée en ce que** l'élément de collecte d'impuretés (67) est un aimant permanent de préférence en forme de tige.

11. Vanne électromagnétique selon la revendication 9 ou 10, **caractérisée en ce que** l'élément de collecte d'impuretés (67) est un treillis perméable à l'écoulement en un matériau en particulier magnétique.

12. Vanne électromagnétique selon l'une quelconque des revendications 9, 10 ou 11, **caractérisée en ce que** l'élément de collecte d'impuretés (67) est un contour de collecte d'impuretés formé sur la paroi intérieure de la conduite hydraulique (47, 53, 65) avec des surélévations (69) et des cavités (71), dans laquelle en particulier un seul des fonds (73) des cavités (71) est réalisé de manière magnétique.
